# FASCICULE DE BREVET EUROPEEN

(11) **EP 3 573 751 B1**
(45) Date de publication et mention de la délivrance du brevet: **09.06.2021**
(21) Numéro de dépôt: 18702785.9
(22) Date de dépôt: 24.01.2018
(51) Int. Cl.: B01J 20/02, B01J 20/26, B01J 20/28, B01J 20/32, B01J 20/10, H01M 8/1039

(54) **UNE MEMBRANE DE PILE À COMBUSTIBLE**
EINE BRENNSTOFFZELLENMEMBRAN
A FUEL CELL MEMBRANE

(30) Priorité: 25.01.2017 FR 1750604
(43) Date de publication de la demande: 04.12.2019
(73) Titulaire: Commissariat à l'énergie atomique et aux énergies alternatives, 75015 Paris (FR); Specific Polymers, 34160 Castries (FR)
(72) Inventeur: BUVAT, Pierrick, 37250 Montbazon (FR); BIGARRÉ, Janick, 37000 Tours (FR); CELLIER, Julien, 37250 Veigne (FR); LOUBAT, Cédric, 34740 Vendargues (FR); CROUZET, Quentin, 34800 Octon (FR)
(74) Mandataire: Brevalex
(86) Numéro de dépôt international: PCT/FR2018/050162
(87) Numéro de publication internationale: WO 2018/138433

(56) Documents cités:
- EP-A1- 2 624 333
- US-A1- 2013 199 030
- DATABASE WPI Week 199701 22 octobre 1996 (1996-10-22) Thomson Scientific, London, GB; AN 1997-007535 XP002780256, & JP H08 277379 A (INOI T) 22 octobre 1996 (1996-10-22)

## Description

### DOMAINE TECHNIQUE

La présente invention se rapporte à des membranes de piles à combustible constituées de particules inorganiques.

Ces particules ont pour caractéristique de présenter une capacité d'échange ionique particulièrement élevée, du fait qu'elles comportent des groupes échangeurs de protons. De ce fait, ces particules trouvent leur application dans l'élaboration de matériaux conducteurs protoniques, en particulier de matériaux destinés à entrer dans la constitution de membranes conductrices de protons, par exemple, pour des piles à combustible, telles que les piles fonctionnant à H₂/air ou H₂/O₂ (connu sous l'abréviation PEMFC signifiant « *Proton Exchange Membrane Fuel Cell* ») ou fonctionnant au méthanol/air (connu sous l'abréviation DMFC signifiant « *Direct Methanol Fuel Cell* »), pour des électrolyseurs, tels que les électrolyseurs chlore-soude, les électrolyseurs PEMEC (PEMEC signifiant « *Proton Exchange Membrane Electrolysis Cell* ») pour des batteries à circulation d'électrolyte (dites *« batteries redox flow* ») ou pour des dispositifs de purification d'eau.

Ainsi, le domaine technique de l'invention peut être défini, de manière générale, comme celui des particules conductrices de protons dans une pile à combustible.

### ÉTAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le cœur de la pile et doivent, par conséquent, présenter de bonnes performances en matière de conduction protonique, ainsi qu'une faible perméabilité aux gaz réactants (H₂/air ou H₂/O₂ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères appartenant, par exemple, à la famille des polysulfones, des polyéthercétones, des polyphénylènes. Toutefois, il a été constaté, que ces polymères non fluorés se dégradent relativement rapidement dans un environnement de pile à combustible et leur durée de vie reste, pour le moment, insuffisante pour l'application PEMFC.

Des membranes présentant des propriétés plus importantes en matière de durée de vie sont des membranes obtenues à partir de polymères constitués d'une chaîne principale linéaire perfluorée et de chaînes latérales porteurs d'un groupe acide, tel que des groupes acide sulfonique. Parmi les plus connues, on peut citer les membranes commercialisées sous la dénomination NAFION® par la société Dupont de Nemours ou sous la dénomination Dow®, FLEMION® ou Aciplex par les sociétés Dow Chemicals et Asahi Glass. Ces membranes présentent de bonnes performances électrochimiques et une durée de vie intéressante mais néanmoins insuffisante pour les applications PEMFC. De plus, leur coût (plus de 500 euros/m²) reste prohibitif pour la commercialisation. Pour les applications DMFC, elles présentent une perméabilité au méthanol élevée, ce qui limite également leur utilisation avec ce type de combustible. Qui plus est, les monomères les constituant présentent une structure de type hydrophile/hydrophobe, qui les rend particulièrement sensibles aux phénomènes d'hydratation et de déshydratation. Ainsi, leur température de fonctionnement se situe typiquement vers 80°C, puisque au-delà les instabilités d'hydratation vieillissent prématurément les membranes.

Un réel besoin existe donc de stabiliser la conduction protonique de ces membranes autour de 100°C. Pour ce faire, certains auteurs se sont orientés vers le développement de membranes plus complexes comprenant en plus d'une matrice en polymère organique conducteur, des composés ou particules susceptibles d'apporter une conductivité supplémentaire. Lorsque les particules sont des particules minérales, ces membranes sont désignées notamment par la terminologie « membranes hybrides inorganiques-organiques ».

Ainsi, les brevets US 2005/0227135 et US 2005/0244697 décrivent l'introduction de composés inorganiques hydrophiles, afin d'améliorer le niveau d'hydratation des membranes à haute température (les composés inorganiques étant des agglomérats de particules d'oxydes métalliques ou de phosphates métalliques pour US 2005/0227135 ou des matériaux échangeurs de cations à base d'argile pour US 2005/0244697) US 2007/0207359 A1 divulgue les membranes hybrides et leurs utilisation dans une pile à combustible.

Néanmoins, même si ces formulations de membranes composites améliorent les conductivités protoniques des membranes autour de 100°C, elles restent insuffisantes pour satisfaire les critères de fonctionnement d'une pile à combustible à ces températures. Qui plus est, les matrices polymères accueillant ces composés inorganiques présentent déjà un bon niveau de conduction protonique.

Il a été proposé également, dans FR 2 917 733, des particules inorganiques (telles que des particules de silice) greffées, de manière covalente, par des polymères conducteurs de protons, tels que du poly-4-vinylbenzènesulfonate de sodium. Ces particules sont ensuite incorporées dans des matrices polymériques pour former un matériau composite pouvant constituer une membrane conductrice de protons pour piles à combustible.

Ces particules présentent une excellente capacité d'échange ionique. Elles présentent également la particularité d'être greffées par des polymères hydrosolubles. Ainsi, placées dans une phase aqueuse, les particules constituent une dispersion à l'échelle nanométrique, dont les chaînes polymères greffées sont solubilisées (en d'autres termes, les particules sont solvatées par les chaînes polymères), moyennant quoi le mélange des particules et de la phase aqueuse se présente visuellement sous forme d'une solution transparente. Dans un environnement de pile à combustible impliquant un milieu aqueux pour le transfert de protons, de telles particules ne peuvent être utilisées telles quelles pour constituer une membrane mais doivent être utilisées sous forme de matériaux composites, dans lesquelles elles constituent une charge piégée dans une matrice polymérique. En fonctionnement dans la pile à combustible, la membrane sert de passerelle pour le transfert de protons entre le compartiment anodique et le compartiment cathodique, le transfert étant assuré par des groupes conducteurs de protons, tels que des groupes -SO₃H, -PO₃H₂ ou -CO₂H. Pour atteindre des conductivités importantes, il convient que la membrane soit suffisamment hydratée, afin de former un réseau hydrophile au sein de celle-ci. Dès lors, le transfert des protons s'accompagne d'un phénomène d'électroosmose conduisant à la migration de molécules d'eau du compartiment anodique vers le compartiment cathodique. Cette eau s'ajoute à celle qui est créée au niveau du compartiment cathodique, lors des réactions de réduction de l'oxygène. Il s'ensuit un gradient de concentration en eau entre le compartiment cathodique, riche en eau et le compartiment anodique, pauvre en eau, qui génère une pression osmotique conduisant à des transferts d'eau du compartiment cathodique vers le compartiment anodique. Au cours de ces transferts, les polymères greffés à la surface des particules peuvent être amenés à se solubiliser. Dans ce cas, les transferts d'eau entre les compartiments anodique et cathodique génèrent une force motrice au sein des particules susceptible, malgré la phase solide constituée par le matériau inorganique constitutif du cœur des particules, de les faire migrer à la surface de la membrane conduisant ainsi à un appauvrissement de celle-ci et, à terme, à une diminution des performances de conductivité de celle-ci.

Les mêmes mécanismes sont mis en jeu dans des électrolyseurs, avec la particularité supplémentaire que, dans de tels dispositifs, les membranes sont totalement immergées dans une phase aqueuse, ce qui peut amplifier le phénomène d'élution des particules contenues dans les membranes.

Aussi, il existe donc un réel besoin en matière de particules conductrices de protons, qui puissent présenter à la fois une bonne conduction protonique tout en présentant une mobilité moindre lorsqu'elles sont utilisées dans des membranes conductrices de protons. En d'autres termes, il existe un besoin pour des particules conductrices de protons qui ne soient pas soumises à un risque d'élution dans une contexte de fonctionnement en milieu aqueux, tel que cela est le cas des piles à combustible et des électrolyseurs.

### EXPOSÉ DE L'INVENTION

Ainsi l'invention a trait à une membrane conductrice de protons de pile à combustible constituées de particules inorganiques liées, de manière covalente, à des chaînes polymériques, dites premières chaînes, constituées d'au moins un polymère porteur de groupes échangeurs de protons, éventuellement sous forme de sels, lesdites particules étant également liées à des chaînes polymériques, dites deuxièmes chaînes, constituées d'au moins un polymère fluoré non porteur de groupes échangeurs de protons, la liaison entre les particules et lesdites deuxièmes chaînes correspondant à l'une des modalités suivantes :
- lesdites deuxièmes chaînes sont liées aux particules *via* des groupes espaceurs organiques ; ou
- lesdites deuxièmes chaînes sont liées à des premières chaînes (telles que définies ci-dessus) *via* des groupes espaceurs organiques ; ou
- une partie desdites deuxièmes chaînes est liée aux particules *via* des groupes espaceurs organiques tandis que l'autre partie desdites deuxièmes chaînes est liée à des premières chaînes (telles que définies ci-dessus) *via* des groupes espaceurs organiques.

Grâce au greffage des deux types de chaînes polymériques susmentionnées, les particules peuvent présenter, d'une part, une capacité d'échange ionique importante grâce aux premières chaînes (ladite capacité d'échange ionique étant liée directement au nombre de groupes acides échangeurs de protons) et ne sont pas soumises, d'autre part, au phénomène de solubilisation voire d'élution, lorsqu'elles sont mises en contact avec un environnement aqueux, du fait que les deuxièmes chaînes présentent un caractère non hydrosoluble. Enfin, ces deuxièmes chaînes contribuent à rendre les particules directement utilisables en tant que telles comme des membranes. Il n'est donc plus nécessaire de mélanger les particules à un polymère formant matrice pour donner lieu à un matériau composite, comme cela est le cas de l'art antérieur.

En outre, les particules dans l'invention présentent, contrairement aux particules de l'art antérieur, un gonflement hydrique moindre (lequel gonflement peut être responsable d'un phénomène accéléré de vieillissement), une meilleure conductivité et, dans un environnement de pile, permettent d'obtenir un déclin de tension en fonction du temps moindre qu'avec les particules de l'art antérieur.

Comme mentionné ci-dessus, les particules sont liées, entre autres, à des premières chaînes constituées d'au moins un polymère porteur de groupes échangeurs de protons, éventuellement sous forme de sels.

A titre d'exemples de groupes échangeurs de protons, on peut citer les groupes choisis parmi les groupes de formules -PO₃H₂, -CO₂H, ou -SO₃H, les groupes pouvant éventuellement être sous forme de sels.

Par sels, on entend, au sens de l'invention, des groupes de structure ionique résultant de l'action d'une base minérale sur le ou les protons labiles des groupes acides échangeurs de protons.

Lorsque l'on se réfère aux groupes -PO₃H₂, -CO₂H, -SO₃H, les sels correspondant à ceux-ci sont des groupes de formules -PO₃X₂, -CO₂X, -SO₃X, dans lesquelles X est un cation monovalent, tel qu'un cation alcalin comme Na⁺.

Le ou les polymères porteurs de groupes échangeurs de protons, éventuellement sous forme de sels, constitutifs des premières chaînes polymériques peuvent être des polymères comprenant une ou plusieurs unités répétitives issue(s) de la polymérisation d'un ou plusieurs monomères vinyliques, c'est-à-dire de monomères comprenant au moins un groupe éthylénique (ou liaison double carbone-carbone), lesquels monomères présentent au moins un groupe échangeur de protons, éventuellement sous forme de sels.

Par unité répétitive, on précise que l'on entend un groupe bivalent issu d'un monomère après polymérisation de celui-ci.

Parmi les monomères vinyliques susceptibles d'être utilisées, on peut citer l'acide vinylsulfonique, l'acide vinylphosphonique, l'acide vinylacétique et leurs sels.

Il peut être cité également des monomères styréniques comprenant au moins un groupe échangeur de protons, tels qu'un groupe -SO₃H, -PO₃H₂ et -CO₂H, éventuellement sous forme de sels. Des monomères styréniques particuliers sont l'acide 4-vinylbenzoïque, l'acide 3-vinylbenzoïque, l'acide 4-vinylbenzènesulfonique, l'acide 3-vinylbenzènesulfonique, l'acide 4-vinylbenzènephosphonique, l'acide 3-vinylbenzènephosphonique et l'acide 4-vinylbenzèneméthylphosphonique et leurs sels.

A titre d'exemples de polymères porteurs de groupes échangeurs de protons, éventuellement sous forme de sels, on peut citer le poly(4-vinylbenzènesulfonate de sodium) ou le poly(acide 4-vinylbenzènesulfonique), l'unité répétitive de ces polymères répondant respectivement aux formules (I) et (II) suivantes :

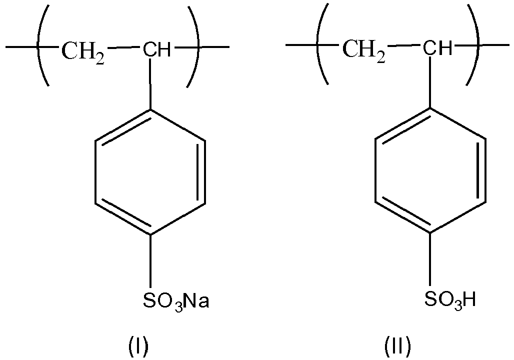

A titre d'exemples, les premières chaînes sont constituées uniquement de poly(4-vinylbenzènesulfonate de sodium) ou de poly(acide 4-vinylbenzènesulfonique).

Les premières chaînes constituées par le ou les polymères porteurs de groupes échangeurs de protons, éventuellement sous forme de sels, sont liées de manière covalente aux particules inorganiques et, de préférence, directement, c'est-à-dire sans le biais de groupes espaceurs organiques formant pont entre lesdites chaînes et lesdites particules. En d'autres termes, chaque première chaîne est liée à une particule *via* une liaison covalente entre la particule et au moins une unité répétitive de la première chaîne.

Les particules inorganiques sont également liées à des chaînes polymériques (dites deuxièmes chaînes) constituées d'au moins un polymère fluoré non porteur de groupes échangeurs de protons, la liaison se faisant de manière indirecte :
- lesdites deuxièmes chaînes étant liées aux particules *via* des groupes espaceurs organiques (dite première variante) ; ou
- lesdites deuxièmes chaînes étant liées à des premières chaînes telles que définies ci-dessus *via* des groupes espaceurs organiques, lesdites premières chaînes étant liées elles-mêmes aux particules (dite deuxième variante) ; ou
- une partie desdites deuxièmes chaînes étant liée aux particules *via* des groupes espaceurs organiques tandis que l'autre partie desdites deuxièmes chaînes est liée à des premières chaînes telle que définies ci-dessus *via* des groupes espaceurs organiques, lesdites premières chaînes étant liées elles-mêmes aux particules (dite troisième variante).

En d'autres termes, cela signifie que :
- selon la première variante, chacune desdites deuxièmes chaînes est liée à une particule *via* au moins un groupe espaceur organique (ce qui signifie, autrement dit, que le ou les groupe(s) espaceur(s) organique(s) est(sont) ainsi lié(s) de manière covalente, par une de ses (leurs) extrémités, à une particule et est (sont) lié(s) de manière covalente, par une autre de ses (leurs) extrémités, à une deuxième chaîne) ;
- selon le deuxième variante, chacune desdites deuxièmes chaînes est liée à au moins une première chaîne telle que définie ci-dessus *via* au moins un groupe espaceur organique (ce qui signifie, autrement dit, que ce ou ces groupe(s) espaceur(s) organique est (sont) ainsi lié(s) de manière covalente, par une de ses (leurs) extrémités, à une première chaîne et est (sont) lié(s) de manière covalente, par une autre de ses (leurs) extrémités, à une deuxième chaîne, étant entendu que la première chaîne est également liée, de manière covalente, à une particule, ce qui n'exclut pas que, en fonction de la proportion des deuxièmes chaînes par rapport aux premières chaînes, des premières chaînes soient, en plus, liées uniquement, de manière covalente, à une particule ;
- selon la troisième variante, une partie desdites deuxièmes chaînes est liée aux particules *via* des groupes espaceurs organiques (soit autrement dit, chacune desdites deuxièmes chaînes de cette partie est liée à une particule *via* au moins un groupe espaceur organique conformément à ce qui décrit pour la première variante) et l'autre partie desdits deuxièmes chaînes est liée, de manière covalente, à des premières chaînes *via* des groupes espaceurs organiques (soit autrement dit, chacune desdites deuxièmes chaînes de cette partie est liée à au moins une première chaîne *via* au moins un groupe espaceur organique conformément à ce qui est décrit selon la deuxième variante). Ceci n'exclut pas que, en fonction de la proportion des deuxièmes chaînes par rapport aux premières chaînes, des premières chaînes soient, en plus, liées uniquement, de manière covalente, à une particule.

Encore autrement dit, la liaison entre les particules et les deuxièmes chaînes s'effectue :
- selon la première variante, *via* des groupes espaceurs organiques formant pont entre les particules et les deuxièmes chaînes ;
- selon la deuxième variante, *via* les premières chaînes qui sont liées aux deuxième chaînes *via* des groupes espaceurs organiques formant pont entre les premières chaînes et les deuxièmes chaînes, étant entendu que les premières chaînes sont liées, de manière covalente, aux particules ;
- selon la troisième variante, à la fois *via* des groupes espaceurs organiques formant pont entre les particules et les deuxièmes chaînes et *via* les premières chaînes qui sont liées aux deuxième chaînes *via* des groupes espaceurs organiques formant pont entre les premières chaînes et les deuxièmes chaînes, étant entendu que les premières chaînes sont liées, de manière covalente, aux particules.

Encore en d'autres termes, selon la première variante, si l'on représente les premières chaînes polymériques par Y¹, les deuxièmes chaînes polymériques par Y² et les groupes espaceurs organiques par X', il est possible que des particules étant liées, de manière covalente, à des greffons de formules suivantes : 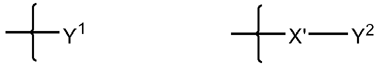 les accolades indiquant que Y¹ ou X' sont directement liés à une particule.

Selon la deuxième variante, il est possible que des particules étant liées, de manière covalente, à des greffons de formule suivante : 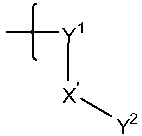 et, éventuellement, des greffons de formule suivante : 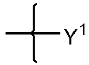 les accolades indiquant que Y¹ est directement lié à une particule.

Selon la troisième variante, il est possible que des particules étant liées, de manière covalente, à des greffons de formules suivantes : 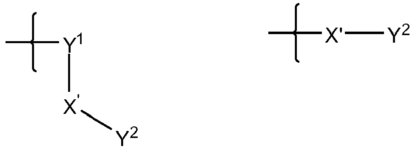 et, éventuellement, des greffons de formule suivante : 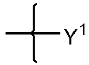 les accolades indiquant que Y¹ ou X' sont directement liés à une particule.

Il s'entend que le groupe espaceur organique est distinct des premières chaînes et est un groupe non polymérique.

Selon un mode particulier de réalisation de la divulgation seule la première variante est envisageable, c'est-à-dire que l'ensemble des deuxièmes chaînes est lié aux particules *via* des groupes espaceurs organiques.

Le ou les polymères fluorés susmentionnés constitutifs des deuxièmes chaînes peuvent être des polymères comprenant une ou plusieurs unités répétitives, au moins une de ces unités comprenant au moins un atome de fluor.

Plus spécifiquement, il peut s'agir :
- d'un (co)polymère comprenant une unité répétitive issue d'un monomère fluoré, par exemple, les polytétrafluoréthylènes (connu sous l'abréviation PTFE), les polyfluorures de vinylidène (connu sous l'abréviation PVDF), les copolymères d'éthylène fluoré-propylène (connu sous l'abréviation FEP), les copolymères d'éthylène et de tétrafluoroéthylène (connu sous l'abréviation ETFE) ;
- d'un copolymère comprenant au moins deux types d'unités répétitives issues de monomères fluorés, par exemple un copolymère de fluorure de vinylidène et d'hexafluoropropène (connu sous l'abréviation poly(VDF-co-HFP).

De préférence, les polymères fluorés peuvent être des polymères comprenant une ou plusieurs unités répétitives, chacune de ces unités répétitives comprenant au moins un atome de fluor, tels que :
- les polymères comprenant une seule unité répétitive issue d'un monomère fluoré, tels que les polytétrafluoroéthylènes (connus sous l'abréviation PTFE), les polyfluorures de vinylidène (connus sous l'abréviation PVDF) ;
- les copolymères comprenant deux unités répétitives issues de deux monomères fluorés, tels que les copolymères de fluorure de vinylidène et d'hexafluoropropène (connus sous l'abréviation poly(VDF-co-HFP)).

Il s'entend que l'une au moins de ses unités répétitives sera modifiée par le fait qu'elle est liée à un groupe espaceur organique, qui fait pont entre une deuxième chaîne et une particule ou une première chaîne et une deuxième chaîne.

Au sens de l'invention, les groupes espaceurs organiques (à savoir, des groupes organiques formant pont entre les particules et lesdites deuxièmes chaînes ou entre des deuxièmes chaînes et des premières chaînes) peuvent être un groupe hydrocarboné non polymérique, se présentant sous forme d'une chaîne linéaire ou ramifiée, dans laquelle peuvent venir s'intercaler un ou plusieurs groupes (dits groupes de liaison), tels que des groupes -(C=O)-, -(C=O)O-, -SO₂, des groupes amides, des groupes amines, des groupes silanoxy.

Plus spécifiquement, le groupe espaceur organique peut répondre à la formule (III) suivante :

-X¹-R¹-X²- (III)

dans laquelle :
- X¹ est le groupe lié de manière covalente à une particule ou à une première chaîne, ce groupe pouvant être l'un des groupes de liaison mentionnés ci-dessus ;
- R¹ est un groupe organique formant pont entre X¹ et X²; et
- X² est le groupe lié de manière covalente à au moins une deuxième chaîne, ce groupe pouvant être l'un des groupes de liaison mentionnés ci-dessus.

Plus spécifiquement, lorsque X¹ est un groupe lié de manière covalente à une particule, le groupe X¹ peut être un groupe silanoxy, c'est-à-dire un groupe pouvant répondre à la formule (IV) suivante : 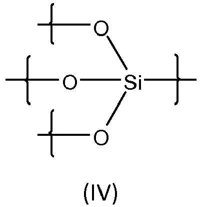 les accolades présentes au niveau des atomes d'oxygène indiquant les endroits par lesquels le groupe silanoxy est lié à la particule (en d'autres termes, le groupe silanoxy est lié à la particule par trois liaisons *via* les atomes d'oxygène) et l'accolade présente au niveau de l'atome de silicium indiquant l'endroit par lequel l'atome de silicium est lié au groupe R¹.

Le groupe R¹ peut être un groupe alkylène et, plus spécifiquement, un groupe alkylène comprenant de 1 à 15 atomes de carbone, par exemple, un groupe n-propylène.

Le groupe X² peut être un groupe amine répondant à l'une des formules (V) et (VI) suivantes : 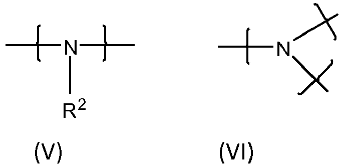 dans laquelle R² représente un groupe alkyle comprenant de 1 à 10 atomes de carbone.

Pour la formule (V), l'accolade à gauche de l'atome d'azote indique l'endroit par lequel l'atome d'azote est lié au groupe R¹ et l'accolade à droite de l'atome d'azote indique l'endroit par lequel l'atome d'azote est lié à une deuxième chaîne.

Pour la formule (VI), l'accolade à gauche de l'atome d'azote indique l'endroit par lequel l'atome d'azote est lié au groupe R¹ et les accolades à droite de l'atome d'azote indiquent les endroits par lesquels l'atome d'azote est lié à une ou plusieurs deuxièmes chaînes (en d'autres termes, l'atome d'azote est lié à une deuxième chaîne par deux liaisons covalentes, par exemple, établies entre deux unités adjacentes de la deuxième chaîne ou encore est lié à deux deuxièmes chaînes distinctes formant ainsi pont entre les deux deuxièmes chaînes).

A titre d'exemple, le groupe espaceur organique peut répondre à l'une des formules (VII) et (VIII) suivantes :

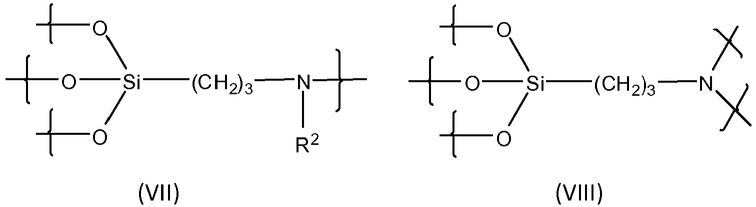

R² étant tel que défini ci-dessus et les accolades ayant une signification identique à celle donnée pour les formules (V) et (VI) ci-dessus.

Quant aux particules inorganiques, elles peuvent être des particules de zéolithes, des particules de phosphates de zirconium, des particules de phosphonates de zirconium, des particules d'argiles, des particules d'oxydes telles que la silice, l'alumine, la zircone, l'oxyde de titane.

En particulier, les particules inorganiques peuvent être des particules d'oxyde, telles que des particules de silice.

En particulier, les particules de silice sont particulièrement avantageuses, car elles constituent des particules hydrophiles comportant des groupes -OH, ces groupes étant intrinsèquement présents sur ces particules, dès lors qu'elles sont en contact avec l'humidité de l'air ambiant.

Ces groupes hydrophiles, tels que les groupes -OH, peuvent participer à la liaison par covalence avec les premières chaînes et avec les deuxièmes chaînes *via* un groupe espaceur organique.

A titre d'exemple, des particules conformes dans l'invention peuvent être des particules en silice liées de manière covalente à des premières chaînes constituées par du poly(4-vinylbenzènesulfonate de sodium) (éventuellement sous forme acide où Na est remplacé par un atome d'hydrogène) et à des deuxièmes chaînes constituées par un copolymère de fluorure de vinylidène et d'hexafluoropropène via un groupe espaceur organique de formules (VII) ou (VIII) telles que définies ci-dessus.

Les particules dans l'invention présentent, comme indiqué plus haut, une conduction protonique de par la nature des premières chaînes et ne sont également pas sensibles au phénomène de solubilisation et d'élution en présence de par la nature des deuxièmes chaînes (à savoir, les polymères fluorés), la présence de ces deuxièmes chaînes permettant également la mise en forme des particules sous forme de membrane, sans nécessiter d'être mélangées avec un polymère formant une matrice. Aussi, l'invention peut avoir trait à des membranes constituées des particules inorganiques conformes à l'invention.

Par conséquent, ces particules trouvent tout naturellement leur application dans le domaine des matériaux conducteurs de protons, tels que les membranes conductrices de protons utilisées, par exemple, dans le domaine des piles à combustible.

Les membranes telles que définies ci-dessus sont incorporées dans des dispositifs de pile à combustible.

Ainsi, l'invention a trait également à un dispositif comprenant au moins un assemblage électrode-membrane-électrode, dans lequel la membrane est telle que définie ci-dessus.

Le dispositif de pile à combustible comprend généralement plusieurs assemblages électrode-membrane-électrode.

Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.

L'assemblage électrode-membrane-électrode est ensuite placé entre deux plaques assurant la conduction électrique et l'alimentation en réactifs aux électrodes. Ces plaques sont communément désignées par le terme de plaques bipolaires.

Divulgué, mais pas selon l'invention est un procédé de préparation de particules telles que définies ci-dessus, ledit procédé comprenant une étape de mise en contact de particules inorganiques liées de manière covalente à des premières chaînes polymériques constituées par au moins un polymère porteur de groupes échangeurs de protons, éventuellement sous forme de sels, avec au moins un polymère fluoré non porteur de groupes échangeurs de protons en présence d'un réactif comprenant au moins un groupe apte à réagir avec les particules inorganiques et/ou les premières chaînes polymériques pour former une liaison covalente (dit premier groupe) et au moins un groupe (dit deuxième groupe) apte à réagir avec au moins groupe dudit polymère fluoré pour former une liaison covalente et ainsi lesdites deuxièmes chaînes telles que définies ci-dessus et une étape de réaction entre le réactif, les particules et le polymère fluoré, moyennant quoi il résulte des particules inorganiques conformes à l'invention et telles que définies ci-dessus.

Quant aux particules inorganiques, elles peuvent être des particules de zéolithes, des particules de phosphates de zirconium, des particules de phosphonates de zirconium, des particules d'argiles, des particules d'oxydes telles que la silice, l'alumine, la zircone, l'oxyde de titane.

En particulier, les particules inorganiques peuvent être des particules d'oxyde, telles que des particules de silice.

En particulier, les particules de silice sont particulièrement avantageuses, car elles constituent des particules hydrophiles comportant des groupes -OH, ces groupes étant intrinsèquement présents sur ces particules, dès lors qu'elles sont en contact avec l'humidité de l'air ambiant, ces groupes -OH étant des groupes aptes à réagir avec un groupe du réactif susmentionné pour former une liaison covalente. Ces particules sont particulièrement appropriées pour le mode de réalisation, dans lequel la liaison entre les deuxièmes chaînes polymériques s'effectue sur les particules *via* un groupe espaceur organique.

Dans le cas où les particules ou les premières chaînes comportent un groupe -OH, le réactif peut comporter comme premier groupe (à savoir, ici, un groupe apte à réagir avec les particules inorganiques ou les premières chaînes) pour former une liaison covalente, un groupe choisi parmi les groupes suivants :
- COOR³ avec R³ représentant un atome d'hydrogène, un groupe alkyle comprenant de 1 à 30 atomes de carbone ou un groupe phényle ;
- COCl ;
- COCH₂CO-R³ avec R³ représentant un atome d'hydrogène, un groupe alkyle comprenant de 1 à 30 atomes de carbone ou un groupe phényle ;
- PO(OH)₂, -PO(OR⁴)(OH) ou -PO(OR⁴)(OR⁵) avec R⁴ et R⁵, identiques ou différents, représentant un groupe alkyle comprenant de 1 à 30 atomes de carbone ou un groupe phényle ;
- CO(NHOH) ;
- M(OR⁶)ₙ₋ₓ₋₁Zₓ avec x étant un entier allant de 1 à (n-1), M étant un métal ou un métalloïde, n étant un degré d'oxydation de M, R⁶ représentant un atome d'hydrogène, un groupe alkyle comprenant de 1 à 30 atomes de carbone, un groupe phényle, un cation métallique monovalent, ou un groupe de formule N⁺R³₄, avec R³ représentant un atome d'hydrogène, un groupe alkyle comprenant de 1 à 30 atomes de carbone, ou un groupe phényle, et Z représente un atome d'hydrogène, un groupe alkyle comprenant de 1 à 30 atomes de carbone, un groupe phényle ou un atome d'halogène ;
- SO₃M' avec M' représentant un atome d'hydrogène, un cation métallique monovalent ou un groupe de formule N⁺R³₄ avec R³ représentant un atome d'hydrogène, un groupe alkyle comprenant de 1 à 30 atomes de carbone ou un groupe phényle ;
- B(OM')₂ avec M' représentant un atome d'hydrogène, un cation métallique monovalent ou un groupe de formule N⁺R³₄ avec R³ représentant un atome d'hydrogène, un groupe alkyle comprenant de 1 à 30 atomes de carbone ou un groupe phényle ;
-OH;
et les combinaisons de ceux-ci.

Pour le groupe de formule -M(OR⁶)ₙ₋ₓ₋₁Zₓ telle que définie précédemment, M peut représenter un élément métallique, tel qu'un élément de transition de degré d'oxydation n donné ou un élément métalloïde tel que Si, Ge, Te de degré d'oxydation n donné, les degrés d'oxydation envisageables pour chaque élément métallique ou métalloïde étant connus de l'homme du métier. A titre d'exemple de groupes conformes à cette définition, on peut citer le groupe de formule
- Si(OR⁶)₃₋ₓZₓ avec x étant un entier allant de 1 à 3, Z et R⁶ ayant les mêmes définitions que celles données ci-dessus.

Plus particulièrement, un groupe approprié peut être un groupe alcoxysilane -Si(OR⁷)₃, avec R⁷ étant un groupe alkyle comprenant de 1 à 10 atomes de carbone, tel qu'un groupe triéthoxysilane, qui va réagir, par exemple, avec les groupes -OH présents au niveau des particules pour former un groupe silanoxy, tel que celui de formule (IV) susmentionnée. Cette réaction peut être catalysée par la présence de composés amines.

Il s'entend que les premiers groupes sont également adaptés pour former une liaison covalente avec les premières chaînes, dès lors que ces premières chaînes comportent au moins un groupe apte à réagir avec lesdits premiers groupes.

Le réactif comporte également une deuxième groupe apte à réagir avec au moins un groupe dudit polymère fluoré pour former une liaison covalente, la réaction mise en œuvre pouvant être une réaction impliquant une étape d'élimination d'acide fluorhydrique dans un des motifs du polymère formant ainsi une double liaison suivie d'une étape d'addition nucléophile sur la double liaison, l'addition nucléophile se faisant *via* un groupe anionique porté par le réaction ou un groupe porteur d'un doublet libre.

Aussi, le deuxième groupe apte à réagir selon les étapes mentionnées ci-dessus peut être un groupe amine -NHR⁸ avec R⁸ étant un atome d'hydrogène ou un groupe alkyle comprenant de 1 à 10 atomes de carbone.

Sans être lié par la théorie et en partant d'un polymère fluoré comprenant une unité répétitive issue de la polymérisation du fluorure de vinylidène, le schéma réactionnel de la réaction susmentionnée avec une amine secondaire -NHR⁸ (avec R⁸ étant un groupe alkyle) peut être le suivant :

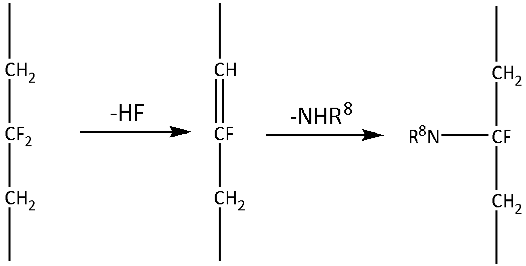

Enfin, le schéma réactionnel de la réaction susmentionnée avec une amine primaire -NH₂ peut être le suivant :

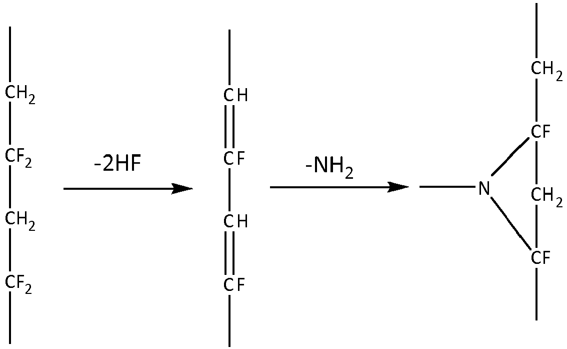

L'atome d'azote peut également relier deux deuxièmes chaînes polymériques distinctes.

Plus spécifiquement, le réactif peut être un réactif répondant à la formule générale (IX) suivante :

(R⁷O)₃Si-R¹-NHR⁸ (IX)

avec R¹, R⁷ et R⁸ étant tels que définis ci-dessus.

Encore plus spécifiquement, le réactif peut être un composé (3-aminopropyl)trialcoxysilane, tel qu'un composé (3-aminopropyl)triéthoxysilane de formule (X) suivante : 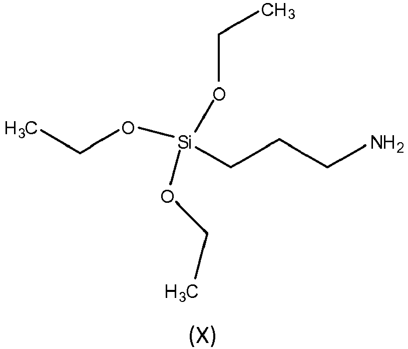 ce composé étant également sous l'abréviation APTES.

Les groupes alcoxysilanes sont particulièrement adaptés pour créer des liaisons -Si-O-Si- avec des particules de silice, tandis que le groupe amine est apte, comme développé ci-dessus, à créer une liaison covalente avec un polymère fluoré.

Il s'entend que le réactif, après avoir réagi, laisse subsister des groupes espaceurs organiques, tels que définis dans la partie dévolue à la description des particules en tant que telles.

L'étape de mise en contact peut être réalisée en présence d'un solvant organique, par exemple, un solvant organique polaire aprotique, tel que du diméthylsulfoxyde.

Après l'étape de mise en contact et avant l'étape de réaction, le mélange résultant peut être soumis à une étape d'évaporation du solvant organique, par exemple, en coulant le mélange sur plaque chauffante, le mélange ainsi évaporé formant une membrane. L'étape de réaction peut ainsi avoir lieu sur le mélange mis en forme de membrane.

L'étape de réaction entre le réactif, les particules greffées et le polymère fluoré peut être effectuée en chauffant le mélange réactionnel à une température adéquate pour que la réaction de couplage s'effectue, par exemple une température de 150°C.

En outre, après l'étape de réaction, que le mélange soit mis sous forme de membrane ou pas, le procédé peut comprendre, le cas échéant, une étape de conversion des groupes conducteurs de protons sous forme de sels en groupes acides, cette étape de conversion consistant à plonger les particules dans une solution acide.

L'invention va maintenant être décrite en référence aux exemples suivants, donnés à titre illustratif et non limitatif.

### BREVE DESCRIPTION DES FIGURES

La figure 1 est un graphique illustrant l'évolution de la tension E (en V) en fonction de la densité de courant D (en A.cm⁻²) pour la pile comportant la membrane 1 (courbe a) et pour la pile comportant la membrane 2) (courbe b).
La figure 2 est un graphique illustrant l'évolution de la tension E (en V) en fonction du temps T (en heures) pour la pile comportant la membrane 1 (courbe a) et pour la pile comportant la membrane 2 (courbe b).

### EXPOSÉ DÉTAILLÉ DE MODES DE RÉALISATION PARTICULIERS

### EXEMPLE COMPARATIF

Cet exemple illustre la préparation d'un mélange pour fabriquer un matériau composite conforme à ce qui est proposé dans l'art antérieur, c'est-à-dire un matériau composite comprenant une matrice en un copolymère de fluorure de vinylidène et d'hexafluoropropène et une charge constituée par des nanoparticules de silice greffées par du poly(4-vinylbenzènesulfonate de sodium).

Le copolymère est fourni par la société Solvay sous la référence Solef® 21216.

Les particules greffées présentent une composition massique en silice et en poly(4-vinylbenzènesulfonate de sodium) respectivement de 15% et de 85%.

La préparation est réalisée de la manière suivante.

Dans un Erlenmeyer de 50 mL, on pèse 1 g de copolymère. Ensuite, les nanoparticules (1,631 g) et du diméthylsulfoxide (26 g) sont ajoutés au copolymère. Les proportions des ingrédients ont été choisies pour obtenir un extrait sec de 9,2 % et pour obtenir un bon compromis entre la viscosité et la solubilité du copolymère.

Le mélange est chauffé à 60°C, sous agitation modérée, afin d'accélérer la solubilisation du copolymère et des nanoparticules, les nanoparticules non solubilisées pouvant être écrasées au moyen d'une spatule.

Puis le mélange résultant est traité avec un mélangeur du type « Speedmixer » de la marque Hauschild de modèle DAC 400.1 FHZ, ce qui permet d'obtenir un mélange dégazé avec une rotation de 2000 tours.min⁻¹ en 2 minutes.

### EXEMPLE 1

Cet exemple illustre la préparation d'un mélange pour fabriquer des particules utilisés dans l'invention.

Pour ce faire, il est appliqué un protocole similaire à celui de l'exemple comparatif si ce n'est que l'on ajoute le composé APTES (dont la formule est définie dans la description ci-dessus) à hauteur de 0,068 g dans le mélange après l'étape de solubilisation des nanoparticules et du copolymère de fluorure de vinylidène et d'hexafluoropropène.

### EXEMPLE 2

Cet exemple illustre la préparation de membranes à partir des mélanges préparés à l'exemple comparatif et à l'exemple 1.

Pour ce faire, les mélanges susmentionnés sont coulés sous hotte à flux laminaire sur une plaque de verre nettoyée préalablement respectivement à l'acétone, au méthanol puis à l'acétone, la coulée s'effectuant à l'aide d'un applicateur manuel du type « *Hand coater* » équipé d'un entrefer de 500 µm. La plaque de verre, sur laquelle a été coulée la solution, est mise sur une plaque chauffante à 110°C, toujours sous hotte à flux laminaire, pendant 2 heures pour évaporer le solvant. L'utilisation de la hotte à flux laminaire pour la coulée et l'évaporation est justifiée pour éviter l'introduction de poussières dans les membranes.

A l'issue de l'étape d'évaporation sur plaque chauffante, les membranes sont portées à 150°C pendant 2 heures pour augmenter le rendement de réaction du réactif APTES pour la membrane coulée et évaporée à partir du mélange de l'exemple 1.

Les membranes obtenues présentent une épaisseur de 25 µm.

### EXEMPLE 3

Dans cet exemple, les membranes obtenues à l'exemple 2 sont soumises à une étape d'acidification pour transformer les groupes sulfonate de sodium en groupes acide sulfonique, les membranes résultantes étant ainsi des membranes conductrices de protons.

Pour ce faire, les membranes sont mises en contact avec une solution d'acide sulfurique concentrée à 98% à température ambiante pendant 4 jours.

Les membranes sont ensuite rincées trois fois avec de l'eau et séchées à température ambiante. Ces membranes sont, ci-dessous, respectivement nommées « Membrane 1 » (pour celle issue du mélange de l'exemple comparatif) et « Membrane 2 » (pour celle issue du mélange de l'exemple 1).

### EXEMPLE 4

Dans cet exemple, les propriétés physico-chimiques des membranes ont été testées. Les résultats figurent dans le tableau ci-dessous.

| Membrane | Solubilité dans le DMSO⁽¹⁾ | Solubilité dans le DMF⁽²⁾ | Solubilité dans le NMP⁽³⁾ | Gonflement dans l'eau (%) | Conductivité protonique (mS.cm⁻¹) |
|---|---|---|---|---|---|
| Membrane 1 | Oui | Oui | Oui | 33 | 68 |
| Membrane 2 | Non | Non | Non | 12 | 89 |

| | | | | | |
|---|---|---|---|---|---|
| (1) DMSO correspondant au diméthylsulfoxyde (2) DMF correspondant au N,N-diméthylformamide (3) NMP correspondant au N-méthylpyrrolidone | | | | | |

La membrane 2 obtenue avec les particules de l'invention est insoluble dans les solvants organiques, y compris les solvants polaires. Cette propriété démontre l'efficacité de la réaction de couplage entre le réactif APTES, les nanoparticules et le copolymère de fluorure de vinylidène et d'hexafluoropropène.

Par ailleurs, les résultats obtenus avec la membrane 2 montrent une baisse sensible du gonflement dans l'eau (à l'origine souvent du vieillissement des piles) et une augmentation significative de la conductivité protonique (qui est un critère essentiel pour le fonctionnement d'une pile).

### EXEMPLE 5

Dans cet exemple, les membranes de l'exemple 3 sont placées dans une pile à combustible H₂/O₂ et ont été caractérisées, dans cet environnement de pile, à 2 bars et 60°C.

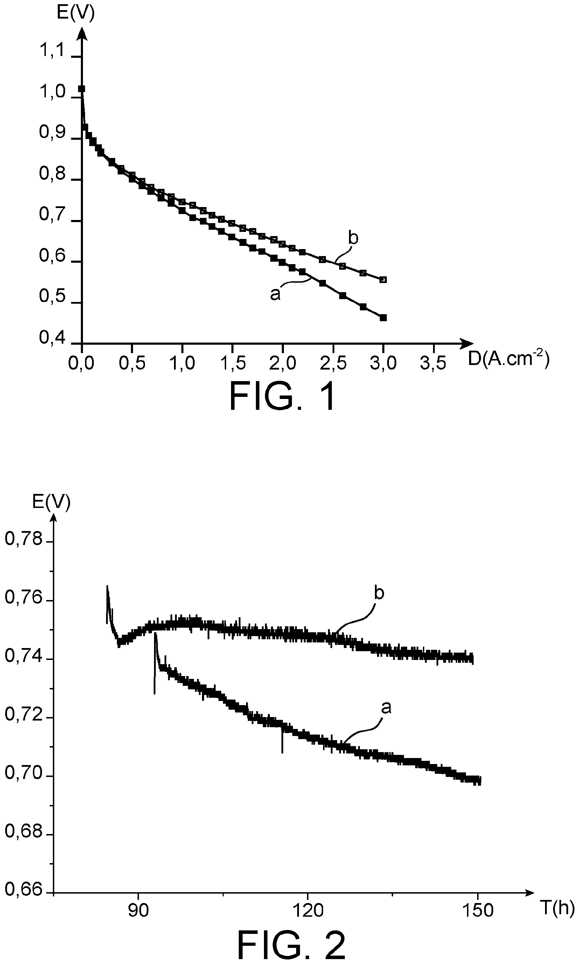

Il a été déterminé, dans un premier temps, l'évolution de la tension E (en V) en fonction de la densité de courant D (en A.cm⁻²), les résultats étant reportés sur la figure 1 (courbe a) pour la pile comportant la membrane 1 et courbe b) pour la pile comportant la membrane 2).

La tension en circuit ouvert obtenue pour les deux piles est supérieure à 1 V (respectivement, 1,019 V pour la pile comportant la membrane 1 et 1,009 V pour la pile comportant la membrane 2). Ce résultat indique qu'il n'y a pas de « cross-over » ou de courant de fuite pour la pile comportant la membrane 2.

Ensuite, à faible densité de courant, les courbes a) et b) sont superposées, ce qui indique une activité catalytique identique pour les deux membranes.

Enfin, à densité de courant plus élevée, les tensions obtenues pour la pile comportant la membrane 2 sont supérieures à celles obtenues pour la pile comportant la membrane 1. Par exemple, la densité de courant obtenue pour atteindre 0,7 V est de 1,4 A.cm⁻² pour la pile comprenant la membrane 2, alors qu'elle n'est que de 1,2 A.cm⁻² pour la pile comprenant la membrane 1, ce qui représente une augmentation de performance de 16% pour la pile comprenant la membrane 2.

Il a été déterminé, dans un deuxième temps, l'évolution de la tension E (en V) en fonction du temps (en heures) à 80°C pendant 150 heures pour une densité de courant fixe de 1 A.cm⁻², les résultats étant reportés sur la figure 2 (courbe a) pour la pile comportant la membrane 1 et courbe b) pour la pile comportant la membrane 2). Il s'agit en fait d'observer la chute de tension en fonction du temps à une densité de courant fixe.

Le déclin de tension obtenu avec la pile comportant la membrane 2 est 2,5 fois plus faible que celui obtenu avec la pile comprenant la membrane 1. Ceci atteste d'une meilleure stabilité des nanoparticules dans la membrane 2 et valide le principe de la stabilisation des membranes conformes à l'invention.

## Revendications

1. Membrane conductrice de protons de pile à combustible constituée de particules inorganiques liées, de manière covalente, à des chaînes polymériques (dites premières chaînes) constituées d'au moins un polymère porteur de groupes échangeurs de protons, éventuellement sous forme de sels, lesdites particules étant également liées à des chaînes polymériques (dites deuxièmes chaînes) constituées d'au moins un polymère fluoré non porteur de groupes échangeurs de protons, la liaison entre les particules et lesdites deuxièmes chaînes correspondant à l'une des modalités suivantes :
- lesdites deuxièmes chaînes sont liées aux particules *via* des groupes espaceurs organiques ; ou
- lesdites deuxièmes chaînes sont liées à des premières chaînes *via* des groupes espaceurs organiques ; ou
- une partie desdites deuxièmes chaînes est liée aux particules *via* des groupes espaceurs organiques tandis que l'autre partie desdites deuxièmes chaînes est liée à des premières chaînes *via* des groupes espaceurs organiques.

2. Membrane selon la revendication 1, dans laquelle les groupes échangeurs de protons sont des groupes de formules -PO₃H₂, -CO₂H, ou -SO₃H, ces groupes pouvant éventuellement être sous forme de sels.

3. Membrane selon la revendication 1 ou 2, dans laquelle le ou les polymères porteurs de groupes échangeurs de protons, éventuellement sous forme de sels, constitutifs des premières chaînes sont des polymères comprenant une ou plusieurs unités répétitives issue(s) de la polymérisation d'un ou plusieurs monomères vinyliques, lesquels monomères présentent au moins un groupe échangeur de protons, éventuellement sous forme de sels.

4. Membrane selon la revendication 3, dans laquelle le ou les monomères vinyliques sont des monomères styréniques comprenant au moins un groupe échangeur de protons, éventuellement sous forme de sels.

5. Membrane selon l'une quelconque des revendications précédentes, dans laquelle le polymère porteur de groupes échangeurs de protons est le poly(4-vinylbenzènesulfonate de sodium) ou le poly(acide 4-vinylbenzènesulfonique).

6. Membrane selon l'une quelconque des revendications précédentes, dans laquelle l'ensemble des deuxièmes chaînes est lié aux particules *via* des groupes espaceurs organiques.

7. Membrane selon l'une quelconque des revendications précédentes, dans laquelle le ou les polymères fluorées non porteurs de groupes échangeurs de protons, constitutifs desdites deuxièmes chaînes, sont des polymères comprenant une ou plusieurs unités répétitives, chacune de ces unités répétitives comprenant au moins un atome de fluor, ces polymères étant choisis parmi :
- les polymères comprenant une seule unité répétitive issue d'un monomère fluoré, tels que les polytétrafluoroéthylènes (connus sous l'abréviation PTFE), les polyfluorures de vinylidène (connus sous l'abréviation PVDF) ;
- les copolymères comprenant deux unités répétitives issues de deux monomères fluorés, tels que les copolymères de fluorure de vinylidène et d'hexafluoropropène (connus sous l'abréviation poly(VDF-co-HFP)).

8. Membrane selon l'une quelconque des revendications précédentes, dans laquelle le groupe espaceur organique est un groupe hydrocarboné non polymérique, se présentant sous forme d'une chaîne linéaire ou ramifiée, dans laquelle peuvent venir s'intercaler un ou plusieurs groupes (dits groupes de liaison) choisis parmi -(C=O)-, -(C=O)O-, -SO₂, des groupes amides, des groupes amines, des groupes silanoxy.

9. Membrane selon la revendication 8, dans laquelle le groupe espaceur organique répond à la formule (III) suivante :
-X¹-R¹-X²- (III)
dans laquelle :
-X¹ est le groupe lié de manière covalente à une particule ou à une première chaîne, ce groupe étant l'un des groupes de liaison définis à la revendication 8 ;
-R¹ est un groupe organique formant pont entre X¹ et X²; et
-X² est le groupe lié de manière covalente à au moins une deuxième chaîne, ce groupe étant l'un des groupes de liaison définis à la revendication 8.

10. Membrane selon la revendication 9, dans laquelle le groupe R¹ est un groupe alkylène.

11. Membrane selon l'une quelconque des revendications précédentes, dans laquelle les particules sont des particules de zéolithes, des particules de phosphates de zirconium, des particules de phosphonates de zirconium, des particules d'argiles, des particules d'oxydes telles que la silice, l'alumine, la zircone, l'oxyde de titane.

12. Membrane selon l'une quelconque des revendications précédentes, dans laquelle les particules sont des particules de silice.

13. Dispositif comprenant au moins un moins un assemblage électrode-membrane-électrode, dans lequel la membrane est telle que définie selon l'une quelconque des revendications 1 à 12.

## Patentansprüche

1. Protonenleitende Membran einer Brennstoffzelle, die aus anorganischen Partikeln gebildet ist, die auf kovalente Weise mit Polymerketten (genannt erste Ketten) verbunden sind, die durch wenigstens ein Polymer gebildet sind, das Träger von Protonenaustauschgruppen ist, gegebenenfalls in Form von Salzen, wobei die Partikel ferner mit Polymerketten (genannt zweite Ketten) verbunden sind, die aus wenigstens einem fluorierten Polymer gebildet sind, das nicht Träger von Protonenaustauschgruppen ist, wobei die Verbindung zwischen den Partikeln und den zweiten Ketten einer der folgenden Modalitäten entspricht:
- die zweiten Ketten sind mit den Partikeln über organische Spacergruppen verbunden; oder
- die zweiten Ketten sind mit ersten Ketten über organische Spacergruppen verbunden; oder
- ein Teil der zweiten Ketten ist mit den Partikeln über organische Spacergruppen verbunden, wohingegen der andere Teil der zweiten Ketten mit ersten Ketten über organische Spacergruppen verbunden ist.

2. Membran nach Anspruch 1, bei der die Protonenaustauschgruppen Gruppen der Formeln -PO₃H₂, -CO₂H oder -SO₃H sind, wobei diese Gruppen gegebenenfalls in Form von Salzen sein können.

3. Membran nach Anspruch 1 oder 2, bei der das oder die Polymere, die Träger von Protonenaustauschgruppen sind, gegebenenfalls in Form von Salzen, die die ersten Ketten bilden, Polymere sind, die eine oder mehrere sich wiederholende Einheiten umfassen, das/die aus der Polymerisation von einem oder mehreren Vinylmonomeren stammt/stammen, wobei die Monomere wenigstens eine Protonenaustauschgruppe aufweisen, gegebenenfalls in Form von Salzen.

4. Membran nach Anspruch 3, bei der das oder die Vinylmonomere Styrolmonomere sind, die wenigstens eine Protonenaustauschgruppe umfassen, gegebenenfalls in Form von Salzen.

5. Membran nach einem der vorhergehenden Ansprüche, bei der das Polymer, das Träger von Protonenaustauschgruppen ist, Poly(4-Vinylbenzolsulfonat von Natrium) oder Poly(4-Vinylbenzolsulfonsäure) ist.

6. Membran nach einem der vorhergehenden Ansprüche, bei der die Gesamtheit der zweiten Ketten mit den Partikeln über organische Spacergruppen verbunden ist.

7. Membran nach einem der vorhergehenden Ansprüche, bei der das oder die fluorierte Polymere, die nicht Träger von Protonenaustauschgruppen sind, die die zweiten Ketten bilden, Polymere sind, die eine oder mehrere sich wiederholende Einheiten umfassen, wobei jede dieser sich wiederholenden Einheiten wenigstens ein Fluoratom umfasst, wobei diese Polymere ausgewählt sind aus:
- den Polymeren, die eine einzige sich wiederholende Einheit umfassen, die aus einem fluorierten Monomer stammt, wie zum Beispiel die Polytetrafluorethylene (bekannt unter der Abkürzung PTFE), die Polyfluoride von Vinyliden (bekannt unter der Abkürzung PVDF);
- den Copolymeren, die zwei sich wiederholende Einheiten umfassen, die aus zwei fluorierten Monomeren stammen, wie zum Beispiel die Copolymere von Vinylidenfluorid und von Hexafluorpropen (bekannt unter der Abkürzung Poly(VDF-co-HFP)).

8. Membran nach einem der vorhergehenden Ansprüche, bei der die organische Spacergruppe eine nicht polymerische Kohlenwasserstoffgruppe ist, die die Form einer linearen oder verzweigten Kette aufweist, in der eine oder mehrere Gruppen (genannt Verbindungsgruppen) interkaliert sein können, die ausgewählt sind aus -(C=O)-, -(C=O)O-, -SO₂, den Amidgruppen, den Amingruppen, den Silanoxygruppen.

9. Membran nach Anspruch 8, bei der die organische Spacergruppe der nachfolgenden Formel (III) genügt:
-X¹-R¹-X²- (III)
wobei:
- X¹ die Gruppe ist, die auf kovalente Weise mit einem Partikel oder mit einer ersten Kette verbunden ist, wobei diese Gruppe die eine der Verbindungsgruppen ist, die in Anspruch 8 definiert sind;
- R¹ eine organische Gruppe ist, die eine Brücke zwischen X¹ und X² bildet; und
- X² die Gruppe ist, die auf kovalente Weise mit wenigstens einer zweiten Kette verbunden ist, wobei diese Gruppe die eine der Verbindungsgruppen ist, die in Anspruch 8 definiert ist.

10. Membran nach Anspruch 9, bei der die Gruppe R¹ eine Alkylengruppe ist.

11. Membran nach einem der vorhergehenden Ansprüche, bei der die Partikel Zeolithpartikel sind, Zirkonphosphatpartikel, Zirkonphosphonatpartikel, Argilpartikel, Oxydpartikel wie zum Beispiel Siliziumoxid, Aluminiumoxid, Zirkon, Titanoxid.

12. Membran nach einem der vorhergehenden Ansprüche, bei der die Partikel Siliziumoxidpartikel sind.

13. Vorrichtung, umfassend wenigstens eine Anordnung Elektrode-Membran-Elektrode, wobei die Membran wie gemäß einem der Ansprüche 1 bis 12 definiert ist.

## Claims

1. Proton-conducting membrane for fuel cell constituted of inorganic particles bonded, covalently, to polymer chains (referred to as first chains) constituted of at least one polymer carrying proton-exchanging groups, optionally in the form of salts, said particles also being bonded to polymer chains (referred to as second chains) constituted of at least one fluorinated polymer not carrying proton-exchanging groups, with the bond between the particles and said second chains corresponding to one of the following alternatives:
- said second chains are bonded to the particles *via* organic spacer groups; or
- said second chains are bonded to first chains *via* organic spacer groups; or
- a portion of said second chains is bonded to the particles *via* organic spacer groups while the other portion of said second chains is bonded to first chains *via* organic spacer groups.

2. Membrane according to claim 1, wherein the proton-exchanging groups are groups having formulas -PO₃H₂, -CO₂H, or -SO₃H, with these groups optionally able to be in the form of salts.

3. Membrane according to claim 1 or 2, wherein the polymer or polymers carrying proton-exchanging groups, optionally in the form of salts, forming first chains are polymers comprising one or several repetitive units coming from the polymerisation of one or several vinyl monomers, said monomers have at least one proton-exchanging group, optionally in the form of salts.

4. Membrane according to claim 3, wherein the vinyl monomer or monomers are styrenic monomers comprising at least one proton-exchanging group, optionally in the form of salts.

5. Membrane according to any preceding claim, of which the polymer carrying proton-exchanging groups is poly(sodium 4-vinylbenzenesulfonate) or poly(4-vinylbenzenesulfonic acid).

6. Membrane according to any preceding claim, wherein all of the second chains are bonded to the particles *via* organic spacer groups.

7. Membrane according to any preceding claim, wherein the fluorinated polymer or polymers not carrying proton-exchanging groups, forming said second chains, are polymers comprising one or several repetitive units, with each one of these repetitive units comprising at least one fluorine atom, with these polymers being chosen from:
- the polymers comprising a single repetitive unit coming from a fluorinated monomer, such as polytetrafluoroethylenes (known as the abbreviation PTFE), polyvinylidene fluorides (known as the abbreviation PVDF);
- copolymers comprising two repetitive units coming from two fluorinated monomers, such as copolymers of vinylidene fluoride and of hexafluoropropene (known as the abbreviation poly(VDF-co-HFP)).

8. Membrane according to any preceding claim, wherein the organic spacer group is a non-polymeric hydrocarbon group, having the form of a linear or branched chain, into which can be inserted one or several groups (referred to as linking groups) chosen from -(C=O)-, -(C=O)O-, -SO₂, amide groups, amine groups, silanoxy groups.

9. Membrane according to claim 8, wherein the organic spacer group has the following formula (III):
-X¹-R¹-X²- (III)
wherein:
- X¹ is the group covalently bonded to a particle or to a first chain, with this group being one of the linking groups defined in claim 8;
- R¹ is an organic group forming a bridge between X¹ and X²; and
- X² is the group covalently bonded to at least one second chain, with this group being one of the linking groups defined in claim 8.

10. Membrane according to claim 9, wherein the group R¹ is an alkylene group.

11. Membrane according to any preceding claim, wherein the particles are particles of zeolites, particles of zirconium phosphates, particles of zirconium phosphonates, particles of clays, particles of oxides such as silica, alumina, zirconia, titanium oxide.

12. Membrane according to any preceding claim, wherein the particles are particles of silica.

13. Device comprising at least one electrode-membrane-electrode assembly, wherein the membrane is such as defined to any claims 1 to 12.
